(19) **Europäisches Patentamt European Patent Office Office européen des brevets**

(11) **EP 3 767 331 B1**

(12) **EUROPEAN PATENT SPECIFICATION**

(45) Date of publication and mention of the grant of the patent:
**30.08.2023 Bulletin 2023/35**

(21) Application number: **19806939.5**

(22) Date of filing: **05.05.2019**

(51) International Patent Classification (IPC):
*G01S 13/53* $^{(2006.01)}$    *G01S 13/93* $^{(2020.01)}$
*G01S 13/34* $^{(2006.01)}$    *G01S 13/42* $^{(2006.01)}$
*G01S 13/58* $^{(2006.01)}$    *G01S 13/87* $^{(2006.01)}$
*G01S 13/931* $^{(2020.01)}$    *G01S 7/02* $^{(2006.01)}$

(52) Cooperative Patent Classification (CPC):
**G01S 13/931; G01S 7/023; G01S 7/0232; G01S 7/0235; G01S 13/343; G01S 13/345; G01S 13/42; G01S 13/584; G01S 13/87**

(86) International application number:
**PCT/CN2019/085538**

(87) International publication number:
**WO 2019/223515 (28.11.2019 Gazette 2019/48)**

(54) **INFORMATION MEASUREMENT METHOD AND INFORMATION MEASUREMENT DEVICE**

VERFAHREN ZUR INFORMATIONSMESSUNG UND VORRICHTUNG ZUR INFORMATIONSMESSUNG

PROCÉDÉ DE MESURE D'INFORMATIONS ET DISPOSITIF DE MESURE D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2018 CN 201810519401**

(43) Date of publication of application:
**20.01.2021 Bulletin 2021/03**

(73) Proprietor: HUAWEI TECHNOLOGIES CO., LTD.
**Shenzhen, Guangdong 518129 (CN)**

(72) Inventors:
• **ZHANG, Zhiwei**
**Shenzhen, Guangdong 518129 (CN)**
• **XU, Shaofeng**
**Shenzhen, Guangdong 518129 (CN)**
• **ZHAI, Botao**
**Shenzhen, Guangdong 518129 (CN)**

(74) Representative: **Epping - Hermann - Fischer Patentanwaltsgesellschaft mbH**
**Schloßschmidstraße 5**
**80639 München (DE)**

(56) References cited:
EP-A1- 1 837 678     CN-A- 1 815 261
CN-A- 102 224 432     CN-A- 106 796 282
US-A1- 2012 001 791     US-A1- 2015 084 808
US-A1- 2017 090 013     US-B1- 9 945 941

## Description

### TECHNICAL FIELD

This application relates to the field of vehicle-mounted radar technologies, and in particular, to an information measurement method and an information measurement apparatus.

### BACKGROUND

Automobile active safety and automobile self-driving usually need to rely on many sensors to sense an automobile driving environment. As one of key sensors, an automotive radar not only provides position information, speed information, and distance information of a nearby vehicle for automobile active safety and an automobile self-driving system, but also can assist in high-precision positioning and provide target recognition. Moreover, the automotive radar may even become an assisting means for information exchange between vehicles.

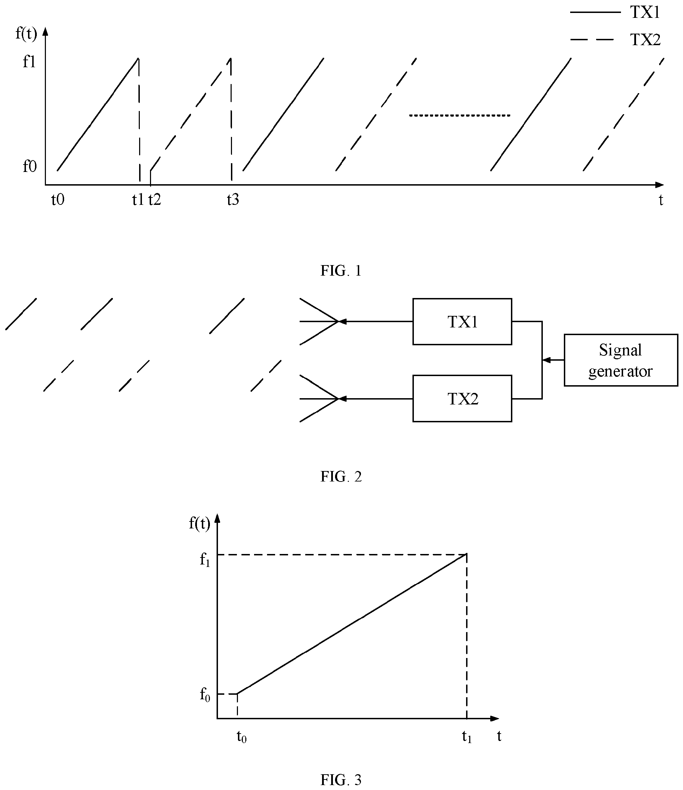

Currently, an automotive radar transmits a measurement signal, and the measurement signal is reflected by another automobile and received by the automotive radar. A signal obtained through reflection of the measurement signal is processed, to calculate information such as a moving speed of the another automobile or a distance from and a position of the another automobile. Most automotive radars use a technology such as a frequency modulated continuous wave (FMCW) or multiple input multiple output (MIMO) technology to implement information measurement. As shown in FIG. 1 and FIG. 2, an automotive radar may transmit a measurement signal waveform through a transmit channel 1 (transmit1, TX1) and TX2 in different time periods, such as a time period from t0 to t1 and a time period from t2 to t3. In this way, in the two measurement periods (from t0 to t3), the automotive radar processes a received signal, and calculates information such as a speed, a position, and a distance.

However, in the foregoing manner, time utilization is low, and transmit channel utilization is also low.

Document US 2012/001791 A1 describes a radar system having two transmitting antennas, both being operated simultaneously and the phase of the signal of the first transmitting antenna is varied alternately from ramp to ramp by a switchable inverter while the phase of the signal of the second transmitting antenna is not varied.

Document US 9 945 941 B1 describes a system and method for improving Doppler shift and range resolution of a given target by transmitting narrowband signals simultaneously with broadband and other signals.

### SUMMARY

This application provides an information measurement method and an information measurement apparatus, according to the attached claims, so as to improve time utilization and improve transmit channel utilization. In the following, parts of the description and drawings referring to embodiments which are not covered by the claims are not presented as embodiments of the invention, but as examples useful for understanding the invention.

According to a first aspect, an embodiment of this application provides an information measurement method, including: simultaneously transmitting a first measurement signal and a second measurement signal; receiving, as a first reflected signal, a signal obtained through reflecting the first measurement signal by a target, and receiving, as a second reflected signal, a signal obtained through reflecting the second measurement signal by the target; and calculating status information of the target based on a difference between the first measurement signal and the first reflected signal and a difference between the second measurement signal and the second reflected signal, where the status information includes one or more of motion information and position information; wherein a relative change rate between the frequency of the first measurement signal and the frequency of the second measurement signal, in one measurement period, changes linearly with time; wherein the simultaneously transmitting a first measurement signal and a second measurement signal means that the transmission time interval between the first measurement signal and the second measurement signal is less than a target time interval.

In this embodiment of this application, the simultaneously transmitting a first measurement signal and a second measurement signal means simultaneously transmitting the first measurement signal and the second measurement signal in one measurement period. Specifically, the simultaneously transmitting a first measurement signal and a second measurement signal may be understood as that a transmission time interval between the first measurement signal and the second measurement signal is less than a target time interval, and the target time interval is far less than a time of one measurement period. The target time interval may be autonomously set by a measurement apparatus, or may be set by a user, or the like.

In this embodiment of this application, the target may be an obstacle reflecting the first measurement signal and obtaining the first reflected signal, or the target may be an obstacle reflecting the second measurement signal and obtaining the second reflected signal, or the target is an obstacle reflecting the first measurement signal and obtaining the first reflected signal, and is also an obstacle reflecting the second measurement signal and obtaining the second reflected signal. In other words, the obstacle reflecting the first measurement signal and obtaining the first reflected signal may be the same as or be different from the obstacle reflecting the second measurement signal and obtaining the second reflected signal.

This is not limited in this embodiment of this application.

In this embodiment of this application, the status information may be the motion information, or the status information is the position information, or the status information is the motion information and the position information.

In implementation of this embodiment of this application, the first measurement signal and the second measurement signal are simultaneously transmitted, and the first reflected signal and the second reflected signal are received, so that the measurement apparatus completes measurement of the position information of the target in one measurement period by using the two measurement signals, or the measurement apparatus completes measurement of the motion information of the target in two measurement periods by using the two measurement signals. This can effectively improve time utilization of information measurement, and can also improve transmit channel utilization, thereby avoiding a case in which a transmit channel cannot be effectively used because one measurement signal is transmitted in different measurement periods.

In an alternative not falling under the scope of the claims, a relative change rate between a frequency of the first measurement signal and a frequency of the second measurement signal does not change with time. According to the invention, in one measurement period, a relative change rate between a frequency of the first measurement signal and a frequency of the second measurement signal changes linearly with time. In the alternative not falling under the scope of the claims, "in one measurement period, a relative change rate between a frequency of the first measurement signal and a frequency of the second measurement signal does not change with time" may be understood as the following: In one measurement period, regardless of how the frequency of the first measurement signal changes with time (using FIG. 1 as an example, in one measurement period such as a time from t2 to t3, the frequency of the measurement signal changes with time), or regardless of how the frequency of the second measurement signal changes with time, it needs to be ensured that the relative change rate between the frequency of the first measurement signal and the frequency of the second measurement signal does not change with time.

In a possible implementation, in one measurement period, a relationship between the first measurement signal and the second measurement signal is as follows: $fm(t) = fn(t) + h(t) \times \Delta fmn$, where $h(t) = \alpha(k) + h_0 \times t$, $fm(t)$ is the frequency of the first measurement signal, $fn(t)$ is the frequency of the second measurement signal, t is a time in the $k$th measurement period, $\Delta fmn$ is an initial frequency deviation between the first measurement signal and the second measurement signal, $h(t)$ is a frequency change rate factor that changes with time in the $k$th measurement period, $h_0$ is an initial frequency change rate factor, and $\alpha(k)$ is a frequency deviation coefficient in the $k$th measurement period.

In a possible implementation, $\alpha(k)=\alpha_0$ or $\alpha(k)=\alpha_0 +g \times k$, where $\alpha_0$ is a constant, and g is a linear factor that changes with $k$.

It may be understood that g may be a positive value or may be a negative value.

In a possible implementation, the calculating status information of the target based on a difference between the first measurement signal and the first reflected signal and a difference between the second measurement signal and the second reflected signal includes: calculating the status information of the target based on a difference between the frequency of the first measurement signal and the frequency of the second measurement signal, the difference between the first measurement signal and the first reflected signal, and the difference between the second measurement signal and the second reflected signal.

In this embodiment of this application, the difference between the frequency of the first measurement signal and the frequency of the second measurement signal may be understood as an absolute value of the difference between the frequency of the first measurement signal and the frequency of the second measurement signal.

In implementation of this embodiment of this application, the relationship between the frequency of the first measurement signal and the frequency of the second measurement signal is used, so that the information measurement apparatus can calculate the status information of the target based on the relationship between the frequency of the first measurement signal and the frequency of the second measurement signal. This improves measurement efficiency.

In a possible implementation, the status information includes the position information, and the simultaneously transmitting a first measurement signal and a second measurement signal includes: simultaneously transmitting the first measurement signal and the second measurement signal in a first time period, where the first time period is at least one measurement period.

In a possible implementation, the status information includes the motion information, and the simultaneously transmitting a first measurement signal and a second measurement signal includes: simultaneously transmitting the first measurement signal and the second measurement signal in a second time period, where the second time period is at least two measurement periods.

According to a second aspect, an embodiment of this application provides an information measurement apparatus, including: a transmission unit, configured to simultaneously transmit a first measurement signal and a second measurement signal; a receiving unit, configured to receive, as a first reflected signal, a signal obtained through reflecting the first measurement signal by a target, and receive, as a second reflected signal, a signal obtained through reflecting the second measurement signal by the target; and a calculation unit, configured to calculate status information of the target based on a difference between the first measurement signal and the first reflected signal and a difference between the second measurement signal and the second reflected signal, where the status information includes one or more of motion information and position information, wherein a relative change rate between the frequency of the first measurement signal and the frequency of the second measurement signal, in one measurement period, changes linearly with time; wherein the simultaneously transmitting a first measurement signal and a second measurement signal means that the transmission time interval between the first measurement signal and the second measurement signal is less than a target time interval.

In a possible implementation, in one measurement period, a relationship between the first measurement signal and the second measurement signal is as follows: $fm(t) = fn(t) + h(t) \times \Delta fmn$, where $h(t)=\alpha(k)+h_0 \times t$, $fm(t)$ is the frequency of the first measurement signal, $fn(t)$ is the frequency of the second measurement signal, t is a time in the $k^{th}$ measurement period, $\Delta fmn$ is an initial frequency deviation between the first measurement signal and the second measurement signal, $h(t)$ is a frequency change rate factor that changes with time in the $k^{th}$ measurement period, $h_0$ is an initial frequency change rate factor, and $\alpha(k)$ is a frequency deviation coefficient in the $k^{th}$ measurement period.

In a possible implementation, $\alpha(k)= \alpha_0$ or $\alpha(k)=\alpha_0 +g \times k$, where $\alpha_0$ is a constant, and $g$ is a linear factor that changes with $k$.

In a possible implementation, the calculation unit is specifically configured to calculate the status information of the target based on a difference between the frequency of the first measurement signal and the frequency of the second measurement signal, the difference between the first measurement signal and the first reflected signal, and the difference between the second measurement signal and the second reflected signal.

In a possible implementation, the status information includes the position information, and the transmission unit is specifically configured to simultaneously transmit the first measurement signal and the second measurement signal in a first time period, where the first time period is at least one measurement period.

In a possible implementation, the status information includes the motion information, and the transmission unit is specifically configured to simultaneously transmit the first measurement signal and the second measurement signal in a second time period, where the second time period is at least two measurement periods.

According to a third aspect, an embodiment of this application further provides an information measurement apparatus that can implement the information measurement method in the first aspect. For example, the information measurement apparatus may be a chip, such as a communications chip. Alternatively, the information measurement apparatus may be a device, such as an information measurement device. The information measurement apparatus may implement the foregoing method by using software or hardware, or by executing corresponding software by using hardware.

When a part or all of the foregoing information measurement method is implemented by using software, the information measurement apparatus includes a processor, a memory, and a transceiver. The processor, the memory, and the transceiver are connected to each other by using a line. The transceiver is configured to: simultaneously transmit a first measurement signal and a second measurement signal; and receive, as a first reflected signal, a signal obtained through reflecting the first measurement signal by a target, and receive, as a second reflected signal, a signal obtained through reflecting the second measurement signal by the target. The memory stores a program instruction, and when the program instruction is executed by the processor, the processor is enabled to perform the following operation: calculating status information of the target based on a difference between the first measurement signal and the first reflected signal and a difference between the second measurement signal and the second reflected signal, where the status information includes one or more of motion information and position information.

In a possible implementation, the memory may be a physically independent unit, or may be integrated with the processor.

According to a fourth aspect, an embodiment of this application provides a computer-readable storage medium. The computer-readable storage medium stores an instruction, and when the instruction is run on a computer, the computer is enabled to perform the method according to the first aspect.

According to a fifth aspect, an embodiment of this application provides a computer program product including an instruction. When the computer program product is run on a computer, the computer is enabled to perform the method according to the first aspect.

**BRIEF DESCRIPTION OF DRAWINGS**

FIG. 1 is a schematic diagram of a measurement signal waveform according to an embodiment of this application;
FIG. 2 is a schematic diagram of a measurement signal generation scenario according to an embodiment of this application;
FIG. 3 is a schematic diagram of a frequency modulated continuous wave measurement signal according to an embodiment of this application;
FIG. 4 is a schematic structural diagram of an information measurement apparatus according to an embodiment of this application;
FIG. 5 is a schematic diagram of an information measurement scenario according to an embodiment of this application;

FIG. 6 is a schematic diagram of a combination of frequency deviation coefficients according to an embodiment of this application;

FIG. 7 is a schematic diagram of a change of a frequency deviation coefficient in a plurality of measurement periods according to an embodiment of this application;

FIG. 8 is a schematic diagram of a change of a frequency deviation coefficient in a plurality of measurement periods according to an embodiment of this application;

FIG. 9 is a schematic diagram of a case in which a relative change rate between a frequency of a first measurement signal and a frequency of a second measurement signal does not change with time in one measurement period according to an embodiment of this application;

FIG. 10 is a schematic diagram of a case in which a relative change rate between a frequency of a first measurement signal and a frequency of a second measurement signal changes linearly with time in one measurement period according to an embodiment of this application;

FIG. 11 is a schematic flowchart of an information measurement method according to an embodiment of this application;

FIG. 12a is a schematic diagram of a scenario of an information measurement method according to an embodiment of this application;

FIG. 12b is a schematic diagram of a relationship between a first measurement signal and a second measurement signal according to an embodiment of this application;

FIG. 13a is a schematic diagram of a scenario of an information measurement method according to an embodiment of this application;

FIG. 13b is a schematic diagram of a relationship between a first measurement signal and a second measurement signal according to an embodiment of this application;

FIG. 14a is a schematic diagram of a scenario of an information measurement method according to an embodiment of this application;

FIG. 14b is a schematic diagram of a relationship between a first measurement signal and a second measurement signal according to an embodiment of this application;

FIG. 15 is a schematic structural diagram of an information measurement apparatus according to an embodiment of this application; and

FIG. 16 is a schematic structural diagram of an information measurement apparatus according to an embodiment of this application.

## DESCRIPTION OF EMBODIMENTS

The following describes the technical solutions in the embodiments of this application with reference to the accompanying drawings in the embodiments of this application.

The following specifically describes technical terms in the embodiments of this application.

Frequency modulated continuous wave (frequency modulated continuous wave, FMCW) means that a frequency modulated continuous wave signal is used for a measurement waveform of an automotive radar.

FIG. 3 is a schematic diagram of a frequency modulated continuous wave measurement signal according to an embodiment of this application. A frequency of the frequency modulated continuous wave measurement signal changes with time. A frequency change of the measurement signal shown in FIG. 3 may be as follows: $f(t) = f_0 + k \times (t-t_0)$.

Herein, $f(t)$ is a frequency of the measurement signal at a current moment, $f_0$ is an initial frequency of the measurement signal, $t_0$ is a start time at which the measurement signal is generated, and $k$ is a rate at which the frequency of the measurement signal changes with time.

A measurement period may be a time in which a measurement apparatus continuously transmits a measurement signal. Using FIG. 1 as an example, t0 to t1 is a measurement period, and t2 to t3 is also a measurement period.

Status information: According to the invention, the status information includes one or more of motion information and position information. In other words, the status information may be the motion information, or may be the position information, or may be the motion information and the position information. This is not limited in the embodiments of this application.

Position information: In the embodiments of this application, the position information of a target may include angle information of the target, height information of the target, information about a distance from the target, or the like. The information about the distance from the target may also be understood as information about a distance between the information measurement apparatus and the target.

Motion information: In the embodiments of this application, the motion information of the target may be speed information of the target, or the like.

Target: In the embodiments of this application, the target may be any obstacle that can reflect a measurement signal. For example, the target may be an obstacle that reflects a first measurement signal, or may be an obstacle that reflects a second measurement signal. Specifically, the target may be an obstacle reflecting the first measurement signal and obtaining a first reflected signal, or the target may be an obstacle reflecting the second measurement signal and obtaining a second reflected signal, or the target is an obstacle reflecting the first measurement signal and obtaining a first reflected signal, and is also an obstacle reflecting the second measurement signal and obtaining a second reflected signal. It may be understood that, for ease of understanding and description, in the following, the obstacle reflecting the first measurement signal and obtaining the first reflected signal is referred to as a first target, and the obstacle reflecting the second measurement signal and obtaining the second reflected signal is referred to as a second target. In other words, the first target and the second target may be the same obstacle, or the first target and the second target may be different obstacles.

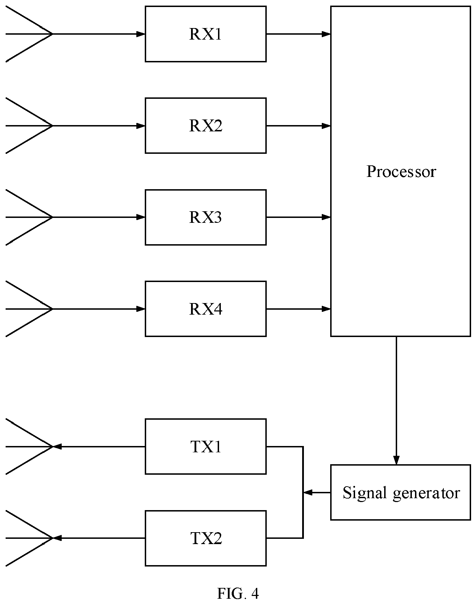

FIG. 4 is a schematic structural diagram of an information measurement apparatus according to an embodiment of this application. As shown in FIG. 4, the information measurement apparatus may include a processor. The processor may be a signal processor, and specifically, may be, for example, a digital signal processing (DSP) system, a signal generator, or at least one transmit antenna connected to a transmit channel and at least one receive antenna connected to a receive channel. The figure shows two transmit channels such as TX1 and TX2, and four receive channels such as RX1, RX2, RX3, and RX4. Specifically, the transmit channel may be used to amplify a measurement signal that needs to be transmitted, and the receive channel may be used to amplify and demodulate a reflected signal. The signal generator may be configured to generate a measurement signal, and control the generated measurement signal to be output to the transmit channel. The DSP system may be used to process a reflected signal that is output through the receive channel, and calculate status information of a target.

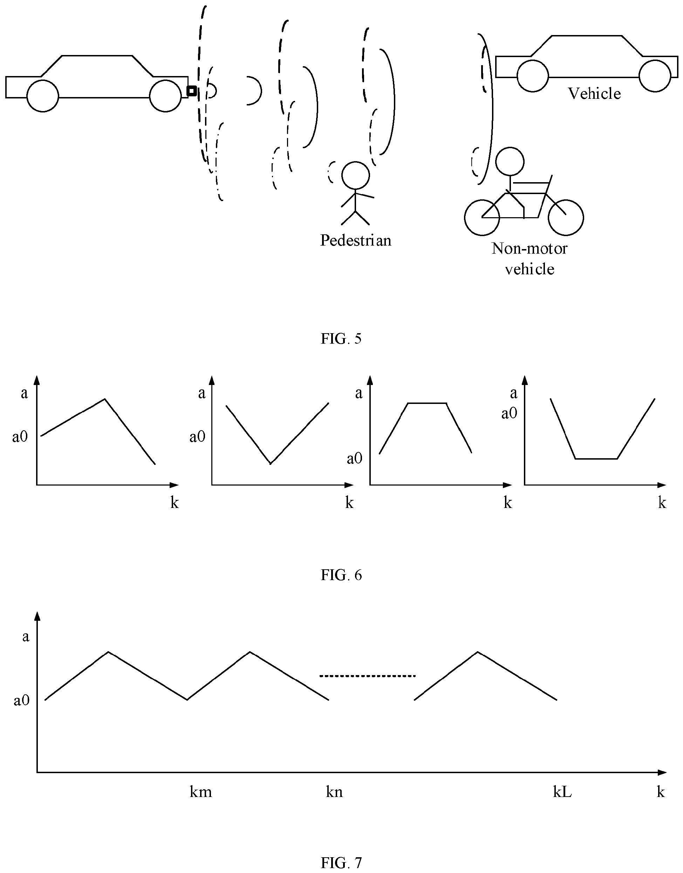

The information measurement apparatus in this embodiment of this application may be installed in an automobile, and is configured to detect a driving environment of the automobile. For example, the information measurement apparatus may be configured to detect obstacles such as another automobile, a non-motor vehicle, and a pedestrian that are in a same driving area. FIG. 5 is a schematic diagram of an information measurement scenario according to an embodiment of this application. It may be understood that the target in this embodiment of this application may be an obstacle such as another automobile, a non-motor vehicle, or a pedestrian. A specific type of obstacle that is the target is not uniquely limited in this embodiment of this application. It may be understood that the obstacle in this embodiment of this application is relative to a device (such as an automobile) to which the information measurement apparatus belongs, and the obstacle may also have another name. Therefore, a name of the obstacle in this embodiment of this application should not be understood as a limitation.

It may be understood that the information measurement apparatus in this embodiment of this application may be a chip, such as a communications chip, or may be a device, such as an information measurement device. A specific carrying form of the information measurement apparatus is not limited in this embodiment of this application.

In schematic diagrams shown in FIG. 1 and FIG. 2, during calculation of status information of a target, only one transmit channel transmits a measurement signal in one measurement period, that is, the status information of the target is calculated by transmitting the measurement signal in a time division manner. In the foregoing manner, time utilization and transmit channel utilization are low. Therefore, an embodiment of this application provides an information measurement method, so that a plurality of measurement signals can be simultaneously transmitted in one measurement period. This improves time utilization, shortening a measurement period, and increasing measurement resolution and precision.

The following describes principles in the embodiments of this application.

It may be understood that the following uses a first measurement signal and a second measurement signal as an example to describe the principles in the embodiments of this application. Specifically, the first measurement signal and the second measurement signal may include a triangular wave signal, a trapezoidal wave signal, a sawtooth signal, a monophonic signal, a frequency shift keying signal, and the like. This is not limited in the embodiments of this application.

Principle 1, not falling under the scope of the claims:

In one measurement period, a relative change rate between a frequency of the first measurement signal and a frequency of the second measurement signal does not change with time. In other words, in one measurement period, the frequency of the first measurement signal and the frequency of the second measurement signal change with time at a same rate.

A relationship between the first measurement signal and the second measurement signal is as follows:

$$fm(t) = fn(t) + \alpha(k) \times \Delta fmn .$$

Herein, $fm(t)$ is the frequency of the first measurement signal, $fn(t)$ is the frequency of the second measurement signal, t is a time in the $k^{\text{th}}$ measurement period, $\Delta fmn$ is an initial frequency deviation between the first measurement signal and the second measurement signal, and $\alpha(k)$ is a frequency deviation coefficient in the $k^{\text{th}}$ measurement period, where $m \leq M$, $n \leq N$, $m \neq n$, and t is greater than or equal to k and is less than k+1, indicating that t is the time in the $k^{\text{th}}$ measurement period. Specifically, $\Delta fmn$ may be a constant, and may be autonomously set by a measurement apparatus, or may be set by a user, or the like. This is not limited in the embodiments of this application. $\alpha(k)$ is the frequency deviation coefficient in the $k^{\text{th}}$ measurement period, and may change with different measurement periods. To be specific, in different measurement periods, the frequency of the first measurement signal and the frequency of the second measurement signal may change with time at different rates or at a same rate, or the like. If there are L measurement periods, $k \leq L$.

In the embodiments of this application, the frequency deviation coefficient in the $k^{th}$ measurement period may be a constant, for example, $\alpha(k) = \alpha_0$, where $\alpha_0$ may be a constant. Alternatively, the frequency deviation coefficient in the $k^{th}$ measurement period may change with $k$, for example, $\alpha(k) = \alpha_0 + g \times k$, where $g$ is a linear factor that changes with k. Specifically, $g$ may be a positive value, or may be a negative value. For example, in a measurement period $k$, $g$ may be a constant, for example, may be 1, 0.1, or 0.08. A value of $g$ is not limited in the embodiments of this application.

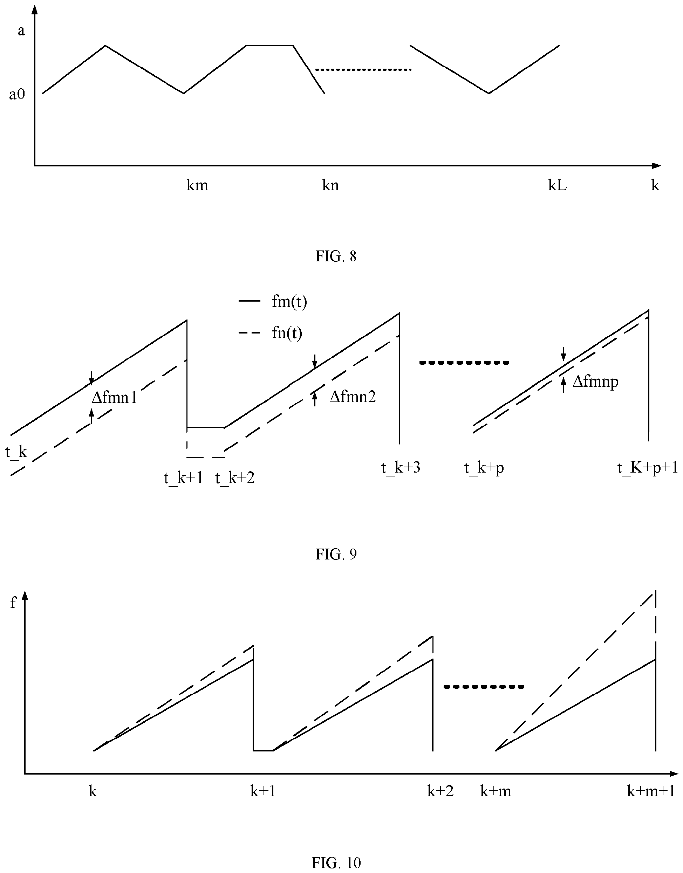

It may be understood that the frequency deviation coefficient in the $k^{th}$ measurement period may alternatively be a combination of the foregoing three forms. FIG. 6 is a schematic diagram of a combination of frequency deviation coefficients according to an embodiment of this application. It may be understood that FIG. 6 shows only one measurement period. Using a schematic diagram of one waveform in FIG. 6 as an example, a change in a plurality of measurement periods may be shown in FIG. 7. Using schematic diagrams of a plurality of waveforms in FIG. 6 as an example, a change in a plurality of measurement periods may be shown in FIG. 8. It may be understood that schematic diagrams shown in FIG. 7 and FIG. 8 are merely examples, and should not be construed as a limitation on the embodiments of this application. To help visually understand Principle 1, FIG. 9 is a schematic diagram of a case in which the relative change rate between the frequency of the first measurement signal and the frequency of the second measurement signal does not change with time in one measurement period according to an embodiment of this application, that is, a schematic diagram of a case in which the frequency of the first measurement signal and the frequency of the second measurement signal change with time at a same rate in one measurement period. As shown in FIG. 9, it can be learned that in a same measurement period, the frequency of the first measurement signal and the frequency of the second measurement signal change with time at a same rate, whereas in different measurement periods, the frequency of the first measurement signal and the frequency of the second measurement signal change with time at different rates.

Principle 2:

In one measurement period, a relative change rate between a frequency of the first measurement signal and a frequency of the second measurement signal changes linearly with time.

A relationship between the first measurement signal and the second measurement signal is as follows: $fm(t) = fn(t) + h(t) \times \Delta fmn$, where $h(t) = \alpha(k) + h_0 \times t$.

Herein, $fm(t)$ is the frequency of the first measurement signal, $fn(t)$ is the frequency of the second measurement signal, t is a time in the $k^{th}$ measurement period, $\Delta fmn$ is an initial frequency deviation between the first measurement signal and the second measurement signal, $h(t)$ is a frequency change rate factor that changes with time in the $k^{th}$ measurement period, $h_0$ is an initial frequency change rate factor,

$h_0$ may be a positive number or may be a negative number, and $\alpha(k)$ is a frequency deviation coefficient in the $k^{th}$ measurement period. For a specific implementation of $\alpha(k)$, refer to specific descriptions of the principle 1. Details are not described herein again.

To help visually understand the principle provided in the embodiments of this application, FIG. 10 is a schematic diagram of a case in which the relative change rate between the frequency of the first measurement signal and the frequency of the second measurement signal changes linearly with time in one measurement period according to an embodiment of this application.

It may be understood that, in the embodiments of this application, when a plurality of measurement signals are simultaneously transmitted, the plurality of measurement signals may be generated by a signal generator, and be output to a transmit channel under control of the signal generator. The plurality of measurement signals may be simultaneously output to one transmit channel, or may be separately output to different transmit channels. This is not limited in the embodiments of this application.

After the principles in the embodiments of this application are described, the following describes an information measurement method in the embodiments of this application.

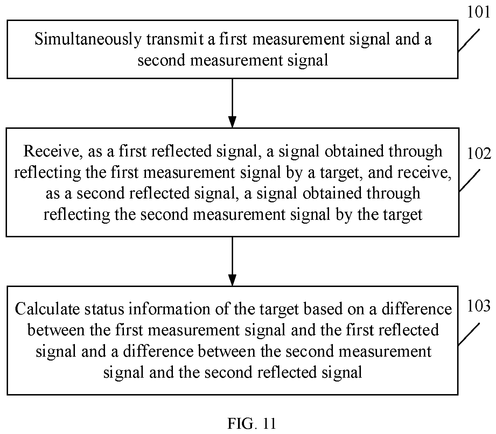

FIG. 11 is a schematic flowchart of an information measurement method according to an embodiment of this application. As shown in FIG. 11, the information processing method includes the following steps.

101: Simultaneously transmit a first measurement signal and a second measurement signal.

In this embodiment of this application, the simultaneously transmitting a first measurement signal and a second measurement signal includes: simultaneously transmitting the first measurement signal and the second measurement signal in one measurement period. In other words, in this embodiment of this application, a plurality of measurement signals may be simultaneously transmitted in one measurement period. For a specific relationship between the plurality of measurement signals, refer to the foregoing embodiment. Details are not described herein again.

102: Receive, as a first reflected signal, a signal obtained through reflecting the first measurement signal by a target, and receive, as a second reflected signal, a signal obtained through reflecting the second measurement signal by the target.

In this embodiment of this application, the first measurement signal and the second measurement signal may encounter different targets, that is, after an information measurement apparatus transmits two measurement signals, the two measurement signals may separately encounter different targets. Therefore, whether the target encountered by the first measurement signal is the same as the target encountered by the second measurement signal is not limited in this embodiment of this application.

Specifically, after the measurement apparatus transmits the first measurement signal, the first measurement signal is reflected by another object (for example, a first target). A signal obtained through reflection by the another object is the first reflected signal, and the measurement apparatus may receive the first reflected signal. Similarly, after the measurement apparatus transmits the second measurement signal, the second measurement signal is reflected by another object (for example, a second target). A signal obtained through reflection by the another object is the second reflected signal, and the measurement apparatus may receive the second reflected signal. It may be understood that the first target and the second target may be the same or may be different. This is not limited in this embodiment of this application.

103: Calculate status information of the target based on a difference between the first measurement signal and the first reflected signal and a difference between the second measurement signal and the second reflected signal.

According to the invention, the status information includes one or more of motion information and position information. The motion information of the target may indicate speed information of the target. The position information of the target may indicate information about a distance between the target and the measurement apparatus, information about a specific angle between the target and the measurement apparatus, and the like.

Specifically, after the first measurement signal is reflected by the target, an amplitude of the first reflected signal is different from an amplitude of the first measurement signal.

Specifically, an embodiment of this application further provides a method for calculating the status information of the target based on a relationship between a frequency of the first measurement signal and a frequency of the second measurement signal, as follows:

The calculating status information of the target based on a difference between the first measurement signal and the first reflected signal and a difference between the second measurement signal and the second reflected signal includes:

calculating the status information of the target based on a difference between the frequency of the first measurement signal and the frequency of the second measurement signal, the difference between the first measurement signal and the first reflected signal, and the difference between the second measurement signal and the second reflected signal.

According to the invention, in one measurement period, a relative change rate between the frequency of the first measurement signal and the frequency of the second measurement signal changes linearly with time. Therefore, in this embodiment of this application, the received reflected signal may be processed based on the relationship between the frequency of the first measurement signal and the frequency of the second measurement signal. For example, frequency shift processing may be performed on one of the reflected signals, such as the first reflected signal. Then, joint processing is performed on the first reflected signal and the second reflected signal that have undergone frequency shift processing, so as to obtain the status information of the target.

In this embodiment of this application, the first measurement signal and the second measurement signal may be further transmitted in different measurement periods based on different information about the measurement target, as follows:

The status information includes the position information, and the simultaneously transmitting a first measurement signal and a second measurement signal includes:

simultaneously transmitting the first measurement signal and the second measurement signal in a first time period, where the first time period is at least one measurement period.

In a possible implementation, the status information includes the motion information, and the simultaneously transmitting a first measurement signal and a second measurement signal includes:

simultaneously transmitting the first measurement signal and the second measurement signal in a second time period, where the second time period is at least two measurement periods.

During calculation of the position information of the target, measurement of the position information of the target may be completed in one measurement period; further, in the one measurement period, the position information of the target is calculated by using two reflected signals, thereby effectively improving measurement precision of the position information. During calculation of the speed information of the target, measurement of the speed information of the target may be completed in two measurement periods, and four reflected signals may be obtained in the two measurement periods. In this way, speed measurement precision can be effectively improved. In addition, compared with transmitting one measurement signal in one measurement period, this can effectively improve time utilization and improve transmit channel utilization.

In implementation of this embodiment of this application, a plurality of measurement signals are transmitted in one measurement period, so that not only transmit channel utilization can be effectively improved, but also a plurality of reflected signals can be obtained in the one measurement period. This improves measurement precision of the status information of the target.

The following describes the information measurement method provided in the embodiments of this application, with reference to specific embodiments.

## Embodiment 1

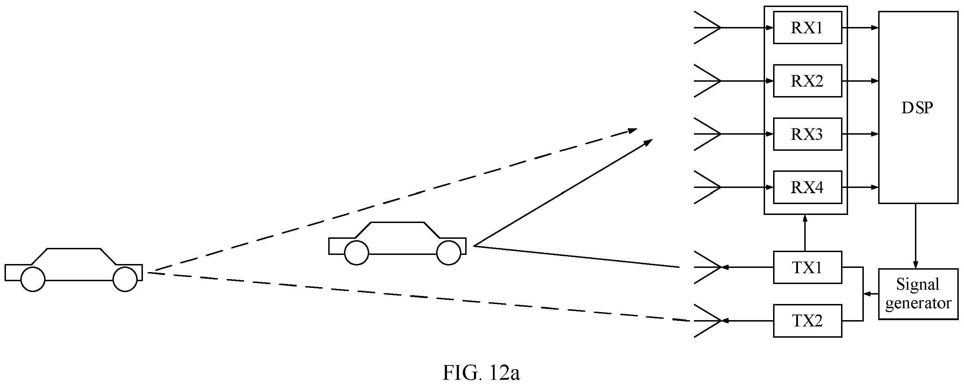

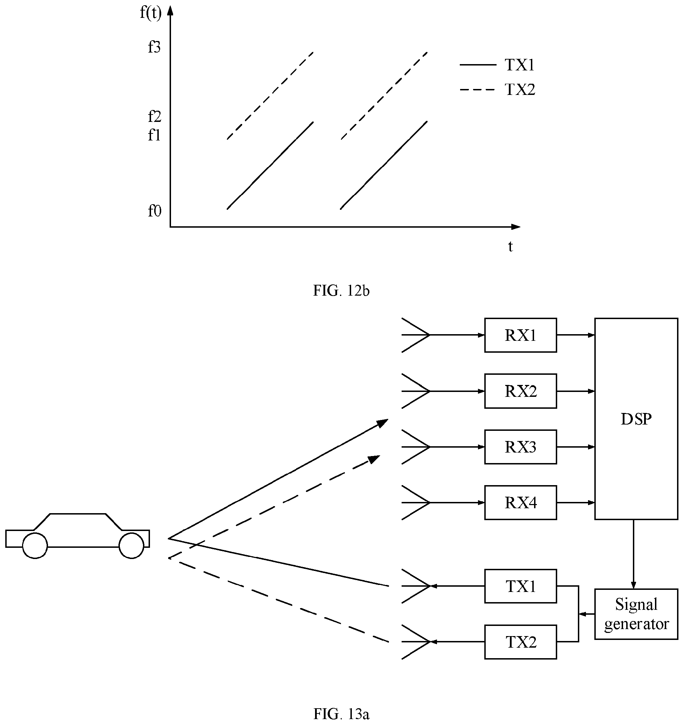

FIG. 12a is a schematic diagram of a scenario of an information measurement method. As shown in FIG. 12a, a measurement apparatus may transmit a first measurement signal and a second measurement signal through TX1 and TX2, respectively. How a frequency of the first measurement signal and a frequency of the second measurement signal change with time is shown in FIG. 12b.

The first measurement signal, such as St1, sent through the TX1 is used for medium-distance measurement. The second measurement signal, such as St2, sent through the TX2 is used for long-distance measurement. In a same measurement period, a frequency deviation between the St1 and the St2 remains constant, for example, $\Delta f$ (that is, $\Delta fmn$ in the foregoing embodiment). For example, the frequency of the first measurement signal sent through the TX1 is lower, by $\Delta f$, than the frequency of the second measurement signal sent through the TX2, that is, $ftx2 = ftx1 + \Delta f$. In this embodiment of this application, long-distance measurement and medium-distance measurement may share one receiving system, and a local oscillator of the receiving system may be provided by the TX1. Specifically, an initial frequency deviation may be set as $\Delta f \times (\Delta R / c) \leq IF$, where $IF$ is an intermediate frequency bandwidth of a system receiver, $\Delta R$ is a relative added distance of long-distance measurement compared with medium-distance measurement, and c is the speed of light.

For example, in the first measurement period, a signal received by the system is $Sr1 = A1 \times St1(t1 - \tau1) + A2 \times St2(t1 - \tau2)$, where $\tau1$ is determined by a distance from a target (for example, a first target) in a medium-distance measurement range, $\tau2$ is determined by a distance from a target (for example, a second target) that is in a long-distance measurement range and that is outside the medium-distance measurement range, and $\tau2 \geq \tau1$.

The information measurement apparatus performs filtering processing on the received signal $Sr1$ to obtain $Sr11 = A1 \times St1(t1-\tau1)$ and $Sr12 = A2 \times St2(t1 - \tau2)$, and performs frequency shift $\Delta f$ on $Sr12$ to obtain $Sr12f$. It may be understood that, in this embodiment of this application, $Sr11$ and $Sr12f$ can be obtained in one measurement period. Therefore, compared with a case in which one measurement signal is transmitted in one measurement period to obtain one reflected signal, this effectively improves time utilization, and shortens a measurement period.

After $Sr11$ and $Sr12f$ are obtained, position information of the first target and position information of the second target can be obtained based on $Sr11$ and $Sr12f$. In addition, because measurement signals transmitted through the TX1 and the TX2 are different, measurement precision can be further improved. In the second measurement period, a signal received by the system is $Sr2 = A1 \times St1(t2 - \tau1) + A2 \times St2(t2 - \tau2)$. $Sr22$ can be

obtained according to the method described above, and then $Sr22f$ is obtained through frequency shift processing. In addition, more reflected signals may also be obtained in the third measurement period or more measurement periods. It may be understood that $t1$ and $t2$ respectively represent start times of sending the measurement signals. Speed information of the first target and speed information of the second target can be separately obtained based on signals $Sr11$, $Sr12f$, $Sr21$, and $Sr22f$ in at least two measurement periods.

In implementation of this embodiment of this application, transmitting dual-frequency measurement signals can further avoid a problem that a delay of arriving at the receiver by a measurement signal reflected by a target at a long distance is longer than that of a measurement signal reflected by a target at a short distance and a receive bandwidth of the receiver of the measurement apparatus is exceeded. In this way, long-distance measurement and short/medium-distance measurement can be simultaneously performed. In addition, $\Delta f$ in different measurement periods may be further designed to change with the measurement periods, and then corresponding frequency conversion is performed in reception processing. This further helps reduce signal aliasing and interference, and the like.

## Embodiment 2

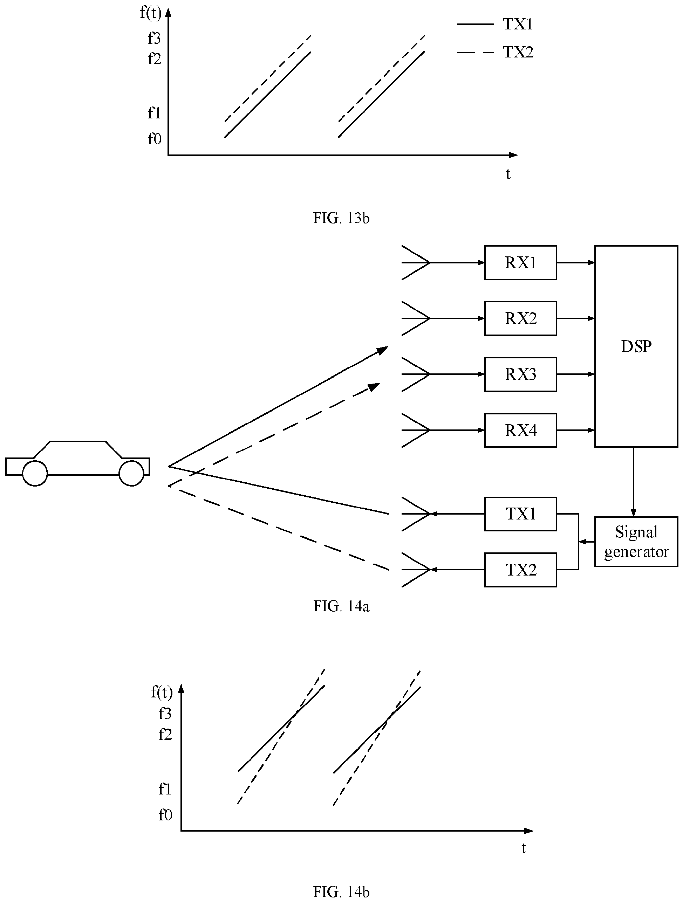

FIG. 13a is a schematic diagram of a scenario of an information measurement method. As shown in FIG. 13a, a measurement apparatus may transmit a first measurement signal and a second measurement signal through TX1 and TX2, respectively. How a frequency of the first measurement signal and a frequency of the second measurement signal change with time is shown in FIG. 13b.

It may be understood that FIG. 13a is a schematic diagram of measuring motion information or position information of a target by the measurement apparatus in a MIMO scenario. In a same measurement period, a frequency deviation between the first measurement signal such as $St1$ transmitted through the TX1 and the second measurement signal such as $St2$ transmitted through the TX2 remains constant, for example, $\Delta f$.

In the first measurement period, a signal received by a system is $Sr1 = A1 \times St1(t1 - \tau1) + A2 \times St2(t1 - \tau2)$, where $\tau1$ is a delay time between the first measurement signal and a first reflected signal in the first measurement period, $\tau1$ is determined by a distance at which the target is located in the first measurement period, $\tau2$ is a delay time between the second measurement signal and a second reflected signal in the first measurement period, and $\tau2$ is determined by a distance at which the target is located in the first measurement period.

In the second measurement period, a signal received by the system is $Sr2 = A1 \times St1(t2 - \tau1) + A2 \times St2(t2 - \tau2)$. $Sr22$ can be obtained according to the method described above, and then $Sr22f$ is obtained through

frequency shift processing. In addition, more reflected signals may also be obtained in the third measurement period or more measurement periods.

Filtering processing is separately performed on $Sr1$ and $Sr2$ based on a frequency difference $\Delta f$, to obtain $Sr11 = A1 \times St1(t1-\tau1)$ and $Sr12 = A2 \times St2(t1-\tau2)$, and $Sr21 = A1 \times St1(t1-\tau1)$ and $Sr22 = A2 \times St2(t2 - \tau2)$, respectively.

Frequency shift processing is performed on $Sr12$ and $Sr22$, to obtain $Sr12f$ and $Sr22f$.

$Sr11$, $Sr12f$, $Sr21$, and $Sr22f$ are jointly processed to obtain information such as angle information, distance information, and speed information of the target.

In addition, $\Delta f$ in different measurement periods may be designed to change with the measurement periods, and then corresponding frequency conversion is performed in reception processing. This helps reduce signal aliasing and interference, and the like.

It may be understood that Embodiment 1 and Embodiment 2 show a case in which $\alpha(k)$ is a constant 1. For a calculation manner of a case in which $\alpha(k)$ changes in different measurement periods, refer to the implementations of Embodiment 1 and Embodiment 2. For example, frequency shift processing may be performed, based on $\Delta fmn \times \alpha(k)$, on a signal obtained through filtering processing. Details are not described herein again.

## Embodiment 3

FIG. 14a is a schematic diagram of a scenario of an information measurement method according to an embodiment of this application. As shown in FIG. 14a, a measurement apparatus may transmit a first measurement signal and a second measurement signal through TX1 and TX2, respectively. How a relative change rate between a frequency of the first measurement signal and a frequency of the second measurement signal changes with time is shown in FIG. 14b.

The first measurement signal and the second measurement signal are reflected by a target and then received through a receive channel. Assuming that a total delay time is $t$ and the frequencies are respectively $f1$ and $f2$, a phase difference between the first measurement signal and a first reflected signal is $\Phi1 = 2\pi f1 t$, and a phase difference between the second measurement signal and a second reflected signal is $\Phi2 = 2\pi f2 t$, where $\Phi1$ and $\Phi2$ are output results of a receiver, and $t$ is a to-be-measured value and is determined by a distance from a measured object (that is, the target). Therefore, $t = (\Phi1 - \Phi2) / (2\pi f1 - 2\pi f2)$ is obtained through calculation based on $\Phi1 - \Phi2 = 2\pi f1 t - 2\pi f2 t$. In this way, this embodiment of this application can be used to improve distance precision.

It may be understood that, although the relative change rate between the frequency of the first measurement signal and the frequency of the second measurement signal changes linearly with time, according to the invention, status information of the target may be further calculated according to the methods shown in Embodiment 1 and Embodiment 2. Details are not described herein in this embodiment of this application again.

In implementation of this embodiment of this application, after the dual-frequency measurement signal transmitted through the TX1 is reflected by the target, a dual-frequency frequency difference carries characteristic information of the reflection target, and the dual-frequency measurement signal is received through the receive channel. In this way, dual-frequency frequency difference information is calculated and processed, thereby helping improve measurement precision and resolution of a system.

The following specifically describes an information measurement apparatus provided in the embodiments of this application.

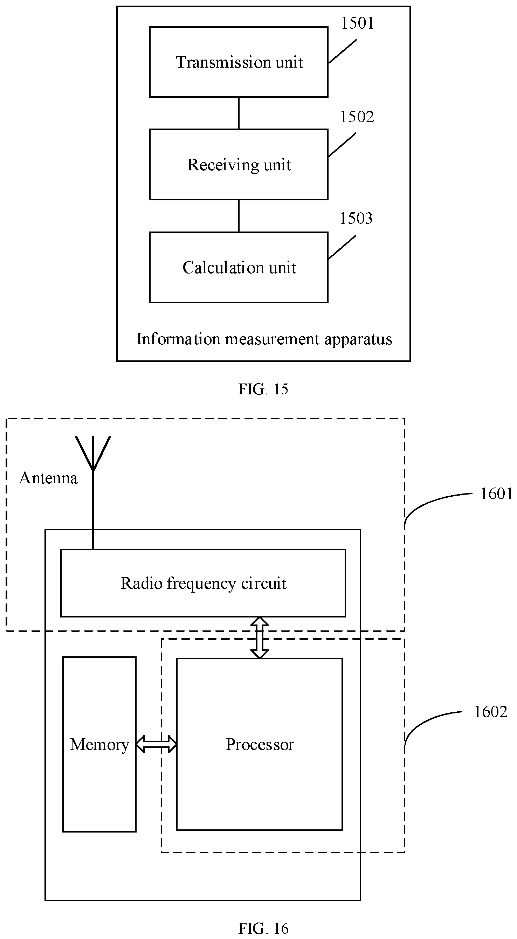

FIG. 15 is a schematic structural diagram of a general information measurement apparatus according to an embodiment of this application. As shown in FIG. 15, the information measurement apparatus includes:

> a transmission unit 1501, configured to simultaneously transmit a first measurement signal and a second measurement signal;
> a receiving unit 1502, configured to receive, as a first reflected signal, a signal obtained through reflecting the first measurement signal by a target, and receive, as a second reflected signal, a signal obtained through reflecting the second measurement signal by the target; and
> a calculation unit 1503, configured to calculate status information of the target based on a difference between the first measurement signal and the first reflected signal and a difference between the second measurement signal and the second reflected signal, where the status information includes one or more of motion information and position information.

It may be understood that the transmit channel and the antenna connected to the transmit channel that are shown in FIG. 4 may be used to perform the method performed by the transmission unit 1501, the receive channel and the antenna connected to the receive channel that are shown in FIG. 4 may be used to perform the method performed by the receiving unit 1502, and a processor such as a DSP system may be configured to perform the method performed by the calculation unit 1503.

In implementation of this embodiment of this application, a plurality of measurement signals are transmitted in one measurement period, so that not only transmit channel utilization can be effectively improved, but also a plurality of reflected signals can be obtained in the one measurement period. This improves measurement precision of the status information of the target.

According to the invention, in one measurement period, a relative change rate between a frequency of the first measurement signal and a frequency of the second measurement signal changes linearly with time.

Possibly, in one measurement period, relationship between the first measurement signal and the second measurement signal is as follows:

$$fm(t) = fn(t) + h(t) \times \Delta fmn$$

$$h(t) = \alpha(k) + h_0 \times t$$

Herein, $fm(t)$ is the frequency of the first measurement signal, $fn(t)$ is the frequency of the second measurement signal, t is a time in the $k^{th}$ measurement period, $\Delta fmn$ is an initial frequency deviation between the first measurement signal and the second measurement signal, $h(t)$ is a frequency change rate factor that changes with time in the $k^{th}$ measurement period, $h_0$ is an initial frequency change rate factor, and $\alpha(k)$ is a frequency deviation coefficient in the $k^{th}$ measurement period.

Herein, $\alpha(k) = \alpha_0$ or $\alpha(k) = \alpha_0 + g \times k$, where $\alpha_0$ is a constant, and $g$ is a linear factor that changes with k.

Specifically, the calculation unit is specifically configured to calculate the status information of the target based on a difference between the frequency of the first measurement signal and the frequency of the second measurement signal, the difference between the first measurement signal and the first reflected signal, and the difference between the second measurement signal and the second reflected signal.

Specifically, the status information includes the position information, and the transmission unit is specifically configured to simultaneously transmit the first measurement signal and the second measurement signal in a first time period, where the first time period is at least one measurement period. Specifically, the status information includes the motion information, and the transmission unit is specifically configured to simultaneously transmit the first measurement signal and the second measurement signal in a second time period, where the second time period is at least two measurement periods.

It may be understood that, for specific implementations of the units shown in FIG. 15, reference may be further made to the specific implementations of the information measurement method shown in FIG. 11, and the specific implementations of Embodiment 1, Embodiment 2, and Embodiment 3. Details are not described herein again.

FIG. 16 is a simplified schematic structural diagram of an information measurement apparatus. The information measurement apparatus may be configured to perform the operations of the information measurement apparatus in the information measurement method shown in FIG. 11, or the information measurement apparatus may perform the operations of the information measurement apparatus in the method shown in FIG. 15.

For ease of description, FIG. 16 shows only main components of the information measurement apparatus. As shown in FIG. 16, the information measurement apparatus includes a processor, a memory, a radio frequency circuit, and an antenna. The processor is mainly configured to: process a communications protocol and communication data, control the information measurement apparatus, execute a software program, process data of the software program, and the like. For example, the processor may be configured to support the information measurement apparatus in performing the method described in FIG. 11. The memory is mainly configured to store a software program and data. The radio frequency circuit is mainly configured to perform conversion between a baseband signal and a radio frequency signal and process the radio frequency signal. The antenna is mainly configured to receive and send radio frequency signals in an electromagnetic wave form. For example, the antenna may receive a wireless signal and send a wireless signal. It may be understood that the information measurement apparatus shown in FIG. 16 may further include a signal generator, which is not shown in the figure.

For ease of description, FIG. 16 shows only one memory and one processor. In an actual information measurement apparatus product, there may be one or more processors and one or more memories. The memory may also be referred to as a storage medium, a storage device, or the like. The memory may be disposed independently of the processor, or may be integrated with the processor. This is not limited in this embodiment of this application.

For example, in this embodiment of this application, the antenna and the radio frequency circuit that have receiving and sending functions may be considered as a receiving unit and a sending unit (which may also be collectively referred to as a transceiver unit 1601) of the information measurement apparatus, and the processor that has a processing function may be considered as a processing unit 1602 of the information measurement apparatus. As shown in FIG. 16, the information measurement apparatus includes the transceiver unit 1601 and the processing unit 1602. The transceiver unit may also be referred to as a transceiver, a transceiver apparatus, or the like. The processing unit may also be referred to as a processor, a processing board, a processing module, a processing apparatus, or the like.

For example, in an embodiment, the transceiver unit 1601 is configured to perform step 101 and step 102 in the embodiment shown in FIG. 11. For example, the transceiver unit 1601 may be configured to simultaneously transmit the first measurement signal and the second measurement signal; and configured to receive, as a first reflected signal, a signal obtained through reflecting the first measurement signal by a target, and receive, as a second reflected signal, a signal obtained through reflecting the second measurement signal by the target. The processing unit 1602 is configured to perform step 103 in the embodiment shown in FIG. 11. For example, the processing unit 1602 may be configured to calculate status information of the target based on a difference between the first measurement signal and the first reflected signal and a difference between the second measurement signal and the second reflected signal.

For another example, in an embodiment, the processing unit 1602 may be further configured to perform the method performed by the calculation unit 1503 shown in FIG. 15.

It may be understood that, for specific implementations of the transceiver unit 1601 and the processing unit 1602, reference may be made to the specific implementations of the foregoing embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by some interfaces. The indirect couplings or communication connections between the apparatuses or units may be implemented in electrical, mechanical, or another form.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the processes or functions according to the embodiments of this application are generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device such as a server or a data center, integrating one or more usable media. The usable medium may be a magnetic medium (for example, a floppy disk, a hard disk, or a magnetic tape), an optical medium (for example, a digital versatile disc (DVD), a semiconductor medium (for example, a solid-state drive (SSD)), or the like.

A person of ordinary skill in the art may understand that all or some of the processes of the method embodiments may be implemented by a computer program instructing relevant hardware. The program may be stored in a computer-readable storage medium. When the program runs, the processes of the method embodiments are performed. The foregoing storage medium includes any medium that can store program code, such as a read-only memory (ROM), a random access memory (RAM), a magnetic disk, or an optical disc.

**Claims**

1. An information measurement method, comprising:

   simultaneously transmitting (101) a first measurement signal and a second measurement signal;
   receiving (102), as a first reflected signal, a signal obtained through reflecting the first measurement signal by a target, and receiving, as a second reflected signal, a signal obtained through reflecting the second measurement signal by the target; and
   calculating (103) status information of the target based on a difference between the first measurement signal and the first reflected signal and a difference between the second measurement signal and the second reflected signal, wherein the status information comprises one or more of motion information and position information;
   wherein a relative change rate between the frequency of the first measurement signal and the frequency of the second measurement signal, in one measurement period, changes linearly with time;
   wherein the simultaneously transmitting a first measurement signal and a second measurement signal means that the transmission time interval between the first measurement signal and the second measurement signal is less than a target time interval.

2. The method according to claim 1, wherein in one measurement period, a relationship between the first measurement signal and the second measurement signal is as follows:

$$fm\left(t\right) = fn\left(t\right) + h\left(t\right) \times \Delta fmn$$

, wherein

$$h(t) = \alpha(k) + h_0 \times t$$

$fm(t)$ is the frequency of the first measurement signal,

$fn(t)$ is the frequency of the second measurement signal, t is a time in the $k^{th}$ measurement period, $\Delta fmn$ is an initial frequency deviation between the first measurement signal and the second measurement signal, $h(t)$ is a frequency change rate factor that changes with time in the $k^{th}$ measurement period, $h_0$ is an initial frequency change rate factor, and $\alpha(k)$ is a frequency deviation coefficient in the $k^{th}$ measurement period.

3. The method according to any one of claims 1 or 2, wherein the calculating status information of the target based on a difference between the first measurement signal and the first reflected signal and a difference between the second measurement signal and the second reflected signal comprises:
calculating the status information of the target based on a difference between the frequency of the first measurement signal and the frequency of the second measurement signal, the difference between the first measurement signal and the first reflected signal, and the difference between the second measurement signal and the second reflected signal.

4. The method according to any one of claims 1 to 3, wherein the status information comprises the position information, and the simultaneously transmitting a first measurement signal and a second measurement signal comprises:
simultaneously transmitting the first measurement signal and the second measurement signal in a first time period, wherein the first time period is at least one measurement period.

5. The method according to any one of claims 1 to 3, wherein the status information comprises the motion information, and the simultaneously transmitting a first measurement signal and a second measurement signal comprises:
transmitting the first measurement signal and the second measurement signal in a second time period, wherein the second time period is at least two measurement periods.

6. An information measurement apparatus, comprising:

a transmission unit (1501), configured to simultaneously transmit a first measurement signal and a second measurement signal;
a receiving unit (1502), configured to receive, as a first reflected signal, a signal obtained through reflecting the first measurement signal by a target, and receive, as a second reflected signal, a signal obtained through reflecting the second measurement signal by the target; and
a calculation unit (1503), configured to calculate status information of the target based on a difference between the first measurement signal and the first reflected signal and a difference between the second measurement signal and the second reflected signal, wherein the status information comprises one or more of motion information and position information;
wherein a relative change rate between the frequency of the first measurement signal and the frequency of the second measurement signal, in one measurement period, changes linearly with time;
wherein the simultaneously transmitting a first measurement signal and a second measurement signal means that the transmission time interval between the first measurement signal and the second measurement signal is less than a target time interval.

7. The apparatus according to claim 6, wherein in one measurement period a relationship between the first measurement signal and the second measurement signal is as follows:

$$fm(t) = fn(t) + h(t) \times \Delta fmn$$

, wherein

$$h(t) = \alpha(k) + h_0 \times t,$$

$fm(t)$ is the frequency of the first measurement signal, $fn(t)$ is the frequency of the second measurement signal, t is a time in the $k^{th}$ measurement period, $\Delta fmn$ is an initial frequency deviation between the first measurement signal and the second measurement signal, $h(t)$ is a frequency change rate factor that changes with time in the $k^{th}$ measurement period, $h_0$ is an initial frequency change rate factor, and $\alpha(k)$ is a frequency deviation coefficient in the $k^{th}$ measurement period.

8. The apparatus according to any one of claims 6 or 7, wherein
the calculation unit is specifically configured to calculate the status information of the target based on a difference between the frequency of the first measurement signal and the frequency of the second measurement signal, the difference between the first measurement signal and the first reflected signal, and the difference between the second measurement signal and the second reflected signal.

9. The apparatus according to any one of claims 6 to 8, wherein the status information comprises the position information, and
the transmission unit is specifically configured to simultaneously transmit the first measurement signal and the second measurement signal in a first time period, wherein the first time period is at least one measurement period.

10. The apparatus according to any one of claims 6 to 8, wherein the status information comprises the motion information, and
the transmission unit is specifically configured to simultaneously transmit the first measurement signal and the second measurement signal in a second time period, wherein the second time period is at least two measurement periods.

11. A computer-readable storage medium, wherein the computer-readable storage medium stores a computer program, the computer program comprises a program instruction, and when the program instruction is executed by a processor of an information measurement apparatus, the processor is enabled to perform the method according to any one of claims 1 to 5.

**Patentansprüche**

1. Informationsmessungsverfahren, das Folgendes umfasst:

gleichzeitiges Übertragen (101) eines ersten Messungssignals und eines zweiten Messungssignals;
Empfangen (102), als ein erstes reflektiertes Signal, eines Signals, das durch Reflektieren des ersten Messungssignals durch ein Ziel erhalten wird, und Empfangen, als ein zweites reflektiertes Signal, eines Signals, das durch Reflektieren des zweiten Messungssignals durch das Ziel erhalten wird; und
Berechnen (103) von Statusinformationen des Ziels basierend auf einer Differenz zwischen dem ersten Messungssignal und dem ersten reflektierten Signal und einer Differenz zwischen dem zweiten Messungssignal und dem zweiten reflektierten Signal, wobei die Statusinformationen Bewegungsinformationen und/oder Positionsinformationen umfassen;
wobei sich eine relative Änderungsrate zwischen der Frequenz des ersten Messungssignals und der Frequenz des zweiten Messungssignals in einer Messungsperiode linear mit der Zeit ändert;
wobei das gleichzeitige Übertragen eines ersten Messungssignals und eines zweiten Messungssignals bedeutet, dass das Übertragungszeitintervall zwischen dem ersten Messungssignal und dem zweiten Messungssignal kleiner als ein Zielzeitintervall ist.

2. Verfahren nach Anspruch 1, wobei in einer Messungsperiode eine Beziehung zwischen dem ersten Messungssignal und dem zweiten Messungssignal wie folgt ist:

$$fm(t) = fn(t) + h(t) \times \Delta fmn,$$

wobei

$$h(t) = \alpha(k) + h_0 \times t,$$

*fm(t)* die Frequenz des ersten Messungssignals ist, fn(t) die Frequenz des zweiten Messungssignals ist, *t* eine Zeit in der k-ten Messungsperiode ist, $\Delta$*fmn* eine anfängliche Frequenzabweichung zwischen dem ersten Messungssignal und dem zweiten Messungssignal ist, h(t) ein Frequenzänderungsratenfaktor, der sich mit der Zeit ändert, in der k-ten Messungsperiode ist, $h_0$ ein anfänglicher Frequenzänderungsratenfaktor ist und $\alpha(k)$ ein Frequenzabweichungskoeffizient in der k-ten Messungsperiode ist.

3. Verfahren nach einem der Ansprüche 1 oder 2, wobei das Berechnen von Statusinformationen des Ziels basierend auf einer Differenz zwischen dem ersten Messungssignal und dem ersten reflektierten Signal und einer Differenz zwischen dem zweiten Messungssignal und dem zweiten reflektierten Signal Folgendes umfasst: Berechnen der Statusinformationen des Ziels basierend auf einer Differenz zwischen der Frequenz des ersten Messungssignals und der Frequenz des zweiten Messungssignals, der Differenz zwischen dem ersten Messungssignal und dem ersten reflektierten Signal und der Differenz zwischen dem zweiten Messungssignal und dem zweiten reflektierten Signal.

4. Verfahren nach einem der Ansprüche 1 bis 3, wobei die Statusinformationen die Positionsinformationen umfassen und das gleichzeitige Übertragen eines ersten Messungssignals und eines zweiten Messungssignals Folgendes umfasst:
gleichzeitiges Übertragen des ersten Messungssignals und des zweiten Messungssignals in einer ersten Zeitperiode, wobei die erste Zeitperiode wenigstens eine Messungsperiode ist.

5. Verfahren nach einem der Ansprüche 1 bis 3, wobei die Statusinformationen die Bewegungsinformationen umfassen und das gleichzeitige Übertragen eines ersten Messungssignals und eines zweiten Messungssignals Folgendes umfasst:
Übertragen des ersten Messungssignals und des zweiten Messungssignals in einer zweiten Zeitperiode, wobei die zweite Zeitperiode wenigstens zwei Messungsperioden ist.

**6.** Informationsmessungseinrichtung, die Folgendes umfasst:

eine Übertragungseinheit (1501), die zum gleichzeitigen Übertragen eines ersten Messungssignals und eines zweiten Messungssignals konfiguriert ist;
eine Empfangseinheit (1502), die zum Empfangen, als ein erstes reflektiertes Signal, eines Signals, das durch Reflektieren des ersten Messungssignals durch ein Ziel erhalten wird, und Empfangen, als ein zweites reflektiertes Signal, eines Signals, das durch Reflektieren des zweiten Messungssignals durch das Ziel erhalten wird, konfiguriert ist; und
eine Berechnungseinheit (1503), die zum Berechnen von Statusinformationen des Ziels basierend auf einer Differenz zwischen dem ersten Messungssignal und dem ersten reflektierten Signal und einer Differenz zwischen dem zweiten Messungssignal und dem zweiten reflektierten Signal konfiguriert ist, wobei die Statusinformationen Bewegungsinformationen und/oder Positionsinformationen umfassen;
wobei sich eine relative Änderungsrate zwischen der Frequenz des ersten Messungssignals und der Frequenz des zweiten Messungssignals in einer Messungsperiode linear mit der Zeit ändert;
wobei das gleichzeitige Übertragen eines ersten Messungssignals und eines zweiten Messungssignals bedeutet, dass das Übertragungszeitintervall zwischen dem ersten Messungssignal und dem zweiten Messungssignal kleiner als ein Zielzeitintervall ist.

**7.** Einrichtung nach Anspruch 6, wobei in einer Messungsperiode eine Beziehung zwischen dem ersten Messungssignal und dem zweiten Messungssignal wie folgt ist:

$$fm(t) = fn(t) + h(t) \times \Delta fmn,$$

wobei

$$h(t) = \alpha(k) + h_0 \times t,$$

*fm(t)* die Frequenz des ersten Messungssignals ist, *fn*(*t*) die Frequenz des zweiten Messungssignals ist, *t* eine Zeit in der k-ten Messungsperiode ist, Δ*fmn* eine anfängliche Frequenzabweichung zwischen dem ersten Messungssignal und dem zweiten Messungssignal ist, *h*(*t*) ein Frequenzänderungsratenfaktor, der sich mit der Zeit ändert, in der k-ten Messungsperiode ist, $h_0$ ein anfänglicher Frequenzänderungsratenfaktor ist und *α*(*k*) ein Frequenzabweichungskoeffizient in der k-ten Messungsperiode ist.

**8.** Einrichtung nach einem der Ansprüche 6 oder 7, wobei
die Berechnungseinheit speziell zum Berechnen der Statusinformationen des Ziels basierend auf einer Differenz zwischen der Frequenz des ersten Messungssignals und der Frequenz des zweiten Messungssignals, der Differenz zwischen dem ersten Messungssignal und dem ersten reflektierten Signal und der Differenz zwischen dem zweiten Messungssignal und dem zweiten reflektierten Messungssignal konfiguriert ist.

**9.** Einrichtung nach einem der Ansprüche 6 bis 8, wobei
die Statusinformationen die Positionsinformationen umfassen, und
die Übertragungseinheit speziell zum gleichzeitigen Übertragen des ersten Messungssignals und des zweiten Messungssignals in einer ersten Zeitperiode konfiguriert ist, wobei die erste Zeitperiode wenigstens eine Messungsperiode ist.

**10.** Einrichtung nach einem der Ansprüche 6 bis 8, wobei
die Statusinformationen die Bewegungsinformationen umfassen, und
die Übertragungseinheit speziell zum gleichzeitigen Übertragen des ersten Messungssignals und des zweiten Messungssignals in einer zweiten Zeitperiode konfiguriert ist, wobei die zweite Zeitperiode wenigstens zwei Messungsperioden ist.

**11.** Computerlesbares Speicherungsmedium, wobei das computerlesbare Speicherungsmedium ein Computerprogramm speichert, das Computerprogramm eine Programmanweisung umfasst und, wenn die Programmanweisung durch einen Prozessor einer Informationsmessungseinrichtung ausgeführt wird, der Prozessor zum Durchführen des Verfahrens nach einem der Ansprüche 1 bis 5 befähigt wird.

**Revendications**

**1.** Procédé de mesure d'informations, comprenant :

la transmission simultanée (101) d'un premier signal de mesure et d'un second signal de mesure ;
la réception (102), en tant que premier signal réfléchi, d'un signal obtenu par l'intermédiaire de la réflexion du premier signal de mesure par une cible, et la réception, en tant que second signal réfléchi, d'un signal obtenu par l'intermédiaire de la réflexion du second signal de mesure par la cible ; et
le calcul (103) d'informations d'état de la cible sur la base d'une différence entre le premier signal de mesure et le premier signal réfléchi et d'une différence entre le second signal de mesure et le second signal réfléchi, dans lequel les informations d'état comprennent des informations de déplacement et/ou des informations de position ;

dans lequel un taux de changement relatif entre la fréquence du premier signal de mesure et la fréquence du second signal de mesure, pendant une période de mesure, change linéairement avec le temps ;

dans lequel la transmission simultanée d'un premier signal de mesure et d'un second signal de mesure signifie que l'intervalle de temps de transmission entre le premier signal de mesure et le second signal de mesure est inférieur à un intervalle de temps cible.

2. Procédé selon la revendication 1, dans lequel pendant une période de mesure, une relation entre le premier signal de mesure et le second signal de mesure est comme suit :

$$fm(t) = fn(t) + h(t) \times \Delta fmn,$$

où

$$h(t) = \alpha(k) + h_0 \times t$$

$fm(t)$ est la fréquence du premier signal de mesure, $fn(t)$ est la fréquence du second signal de mesure, t est un temps pendant la $k_{ième}$ période de mesure, $\Delta fmn$ est un écart de fréquence initial entre le premier signal de mesure et le second signal de mesure, $h(t)$ est un facteur de taux de changement de fréquence qui change avec le temps pendant la $k_{ième}$ période de mesure, $h_0$ est un facteur de taux de changement de fréquence initial, et $\alpha(k)$ est un coefficient d'écart de fréquence pendant la $k_{ième}$ période de mesure.

3. Procédé selon l'une quelconque des revendications 1 ou 2, dans lequel le calcul des informations d'état de la cible sur la base d'une différence entre le premier signal de mesure et le premier signal réfléchi et d'une différence entre le second signal de mesure et le second signal réfléchi comprend :

le calcul des informations d'état de la cible sur la base d'une différence entre la fréquence du premier signal de mesure et la fréquence du second signal de mesure, de la différence entre le premier signal de mesure et le premier signal réfléchi et de la différence entre le second signal de mesure et le second signal réfléchi.

4. Procédé selon l'une quelconque des revendications 1 à 3, dans lequel les informations d'état comprennent les informations de position, et la transmission simultanée d'un premier signal de mesure et d'un second signal de mesure comprend :

la transmission simultanée du premier signal de mesure et du second signal de mesure pendant une première période temporelle, dans lequel la première période temporelle est constituée d'au moins une période de mesure.

5. Procédé selon l'une quelconque des revendications 1 à 3, dans lequel les informations d'état comprennent les informations de déplacement, et la transmission simultanée d'un premier signal de mesure et d'un second signal de mesure comprend :

la transmission simultanée du premier signal de mesure et du second signal de mesure pendant une seconde période temporelle, dans lequel la seconde période temporelle est constituée d'au moins deux périodes de mesure.

6. Appareil de mesure d'informations, comprenant :

une unité de transmission (1501), configurée pour transmettre simultanément un premier signal de mesure et un second signal de mesure ;

une unité de réception (1502), configurée pour recevoir, en tant que premier signal réfléchi, un signal obtenu par l'intermédiaire de la réflexion du premier signal de mesure par une cible, et recevoir, en tant que second signal réfléchi, un signal obtenu par l'intermédiaire de la réflexion du second signal de mesure par la cible ; et

une unité de calcul (1503), configurée pour calculer des informations d'état de la cible sur la base d'une différence entre le premier signal de mesure et le premier signal réfléchi et d'une différence entre le second signal de mesure et le second signal réfléchi, dans lequel les informations d'état comprennent des informations de déplacement et/ou des informations de position ;

dans lequel un taux de changement relatif entre la fréquence du premier signal de mesure et la fréquence du second signal de mesure, pendant une période de mesure, change linéairement avec le temps ;

dans lequel la transmission simultanée d'un premier signal de mesure et d'un second signal de mesure signifie que l'intervalle de temps de transmission entre le premier signal de mesure et le second signal de mesure est inférieur à un intervalle de temps cible.

7. Appareil selon la revendication 6, dans lequel pendant une période de mesure, une relation entre le premier signal de mesure et le second signal de mesure est comme suit :

$$fm(t) = fn(t) + h(t) \times \Delta fmn,$$

où

$$h(t) = \alpha(k) + h_0 \times t$$

*fm(t)* est la fréquence du premier signal de mesure, *fn*(*t*) est la fréquence du second signal de mesure, t est un temps pendant la $k_{i\grave{e}me}$ période de mesure, *Δfmn* est un écart de fréquence initial entre le premier signal de mesure et le second signal de mesure, *h(t)* est un facteur de taux de changement de fréquence qui change avec le temps pendant la $k_{i\grave{e}me}$ période de mesure, $h_0$ est un facteur de taux de changement de fréquence initial, et *α*(*k*) est un coefficient d'écart de fréquence pendant la $k_{i\grave{e}me}$ période de mesure.

8. Appareil selon l'une quelconque des revendications 6 ou 7, dans lequel
l'unité de calcul est spécifiquement configurée pour calculer les informations d'état de la cible sur la base d'une différence entre la fréquence du premier signal de mesure et la fréquence du second signal de mesure, de la différence entre le premier signal de mesure et le premier signal réfléchi et de la différence entre le second signal de mesure et le second signal réfléchi.

9. Appareil selon l'une quelconque des revendications 6 à 8, dans lequel les informations d'état comprennent les informations de position, et
l'unité de transmission est spécifiquement configurée pour transmettre simultanément le premier signal de mesure et le second signal de mesure pendant une première période temporelle, dans lequel la première période temporelle est constituée d'au moins une période de mesure.

10. Appareil selon l'une quelconque des revendications 6 à 8, dans lequel les informations d'état comprennent les informations de déplacement, et
l'unité de transmission est spécifiquement configurée pour transmettre simultanément le premier signal de mesure et le second signal de mesure pendant une seconde période temporelle, dans lequel la seconde période temporelle est constituée d'au moins deux périodes de mesure.

11. Support de stockage lisible par ordinateur, le support de stockage lisible par ordinateur stockant un programme informatique, le programme informatique comprenant des instructions de programme, et lorsque les instructions de programme sont exécutées par un processeur d'un appareil de mesure d'informations, le processeur étant activé pour exécuter le procédé selon l'une quelconque des revendications 1 à 5.

FIG. 1

FIG. 2

FIG. 3

FIG. 4

FIG. 5

FIG. 6

FIG. 7

FIG. 8

FIG. 9

FIG. 10

| Simultaneously transmit a first measurement signal and a second measurement signal | 101 |

↓

| Receive, as a first reflected signal, a signal obtained through reflecting the first measurement signal by a target, and receive, as a second reflected signal, a signal obtained through reflecting the second measurement signal by the target | 102 |

↓

| Calculate status information of the target based on a difference between the first measurement signal and the first reflected signal and a difference between the second measurement signal and the second reflected signal | 103 |

FIG. 11

FIG. 12a

FIG. 12b

FIG. 13a

FIG. 13b

FIG. 14a

FIG. 14b

## FIG. 15

```
┌─────────────────────────────────────┐
│   ┌───────────────────────┐  1501    │
│   │   Transmission unit    │ ╱        │
│   └───────────────────────┘          │
│              │                        │
│   ┌───────────────────────┐  1502    │
│   │    Receiving unit      │ ╱        │
│   └───────────────────────┘          │
│              │                        │
│   ┌───────────────────────┐  1503    │
│   │    Calculation unit    │ ╱        │
│   └───────────────────────┘          │
│                                       │
│   Information measurement apparatus   │
└─────────────────────────────────────┘
```

FIG. 15

## FIG. 16

```
Antenna
                                        1601
   ┌───────────────────────────┐
   │   Radio frequency circuit  │
   └───────────────────────────┘
              ⇕
                                        1602
   ┌────────┐        ┌──────────┐
   │ Memory │ ⇔      │ Processor │
   └────────┘        └──────────┘
```

FIG. 16

**EP 3 767 331 B1**

**Patent documents cited in the description**

- US 2012001791 A1

- US 9945941 B1